(19) Europäisches Patentamt
European Patent Office
Office européen des brevets

(11) **EP 2 028 647 B1**

(12) **EUROPÄISCHE PATENTSCHRIFT**

(45) Veröffentlichungstag und Bekanntmachung des Hinweises auf die Patenterteilung:
**18.03.2015 Patentblatt 2015/12**

(51) Int Cl.:
***G10L 17/10*** *(2013.01)*

(21) Anmeldenummer: **07114958.7**

(22) Anmeldetag: **24.08.2007**

(54) **Verfahren und Vorrichtung zur Sprecherklassifizierung**

Method and device for speaker classification

Procédé et dispositif destinés à la classification d'interlocuteur

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**25.02.2009 Patentblatt 2009/09**

(73) Patentinhaber: **Deutsche Telekom AG**
**53113 Bonn (DE)**

(72) Erfinder:
• **Runge, Fred**
  **15835 Wünsdorf (DE)**
• **Burkhardt, Felix**
  **10625 Berlin (DE)**
• **Stegmann, Joachim**
  **64289 Darmstadt (DE)**
• **Müller, Christian**
  **66352 Großrosseln (DE)**

(74) Vertreter: **2K Patentanwälte Blasberg Kewitz & Reichel**
**Partnerschaft mbB**
**Schumannstrasse 27**
**60325 Frankfurt am Main (DE)**

(56) Entgegenhaltungen:
**WO-A-01/50455**

• **METZ F ET AL: "Comparison of Four Approaches to Age and Gender Recognition for Telephone Applications" IEEE INTERN. CONF. ON ACOUSTICS, SPEECH AND SIGNAL PROCESSING (ICASSP), Bd. 4, 15. April 2007 (2007-04-15), - 20. April 2007 (2007-04-20) Seiten IV-1089-IV-1092, XP002469991 Honolulu (Hawaii)**
• **MÜLLER C: "Zweistufige kontextsensitive Sprecherklassifikation am Beispiel von Alter und Geschlecht" [Online] 2005, , XP002469992 Gefunden im Internet: URL:http: //web.archive.org/web/20070822205 149/http: //w5.cs.uni-sb.de/~cmueller/m3i/d ownloads/ mueller2005-2.pdf> [gefunden am 2007-08-22] * Seite xi - xii * * Abschnitte 1.3.3, 1.5.1, 1.6.3 * * Abschnitte 7.1, 8.2, 8.6, 9.3.3 * * Seite 264 * * Abbildungen 1.1,1.2,1.4,7.1,9.9 ***

**Beschreibung**

Gebiet der Erfindung:

Die Sprachtechnologie, d.h. die maschinelle Verarbeitung natürlicher Sprache, hat in den vergangenen Jahrzehnten zunehmend an Bedeutung gewonnen. Zu den etablierten Anwendungen gehören automatische Spracherkenner (automatic speech recognizer, ASR) und Sprachsynthetisierer (text-to-speech, TTS). State-of-the-art Forschungssysteme sind in der Lage, eine tiefe linguistische Verarbeitung der Sprache durchzuführen. Verbmobil [1] stellt beispielsweise ein System zur Übersetzung spontan gesprochener Äußerungen in drei Sprachen (Deutsch, Englisch und Japanisch) aus dem Bereich der Terminvereinbarung dar.

In der zwischenmenschlichen Kommunikation transportiert der Sprachschall jedoch nicht ausschließlich die Bedeutung einer Äußerung, sondern darüber hinaus auch so genannte paralinguistische Informationen, die z.B. Rückschlüsse auf Sprechercharakteristika zulassen. Es entspricht unserer alltäglichen Erfahrung, dass wir fremde Menschen, mit denen wir telefonieren, anhand ihrer Stimme charakterisieren und unser Kommunikationsverhalten entsprechend anpassen können.

Systeme zu entwickeln, die ihr (Dialog-)Verhalten an die Bedürfnisse des Benutzers anpassen, ist Gegenstand der Benutzermodellierung. Sie gewinnt immer mehr an Bedeutung, da die Anwendung von Computersystemen sich vom Schreibtisch gelöst und Einzug in viele Lebensbereiche gefunden hat. Die besonderen Anforderungen an die Systeme ändern sich mit den unterschiedlichen Situationen, in denen sie benutzt werden. Ein mobiles Fußgängernavigationssystem z.B. sollte den Umstand berücksichtigen, dass der Benutzer sich möglicherweise an einer lauten Straßenkreuzung in der Innenstadt befindet und einen Großteil seiner Aufmerksamkeit auf seine Umgebung richten muss, währenddessen er ein anderes Mal auf einer ruhigen Parkbank sitzt und sich voll dem Dialog mit dem System widmen kann (vgl. [2]). Der Forschungsbereich der Sprecherklassifikation definiert sich darüber, die Informationen über den Sprecher, die notwendig sind, um ein geeignetes Benutzermodell aufzubauen, unmittelbar auf Basis der in der Sprache erhaltenen Informationen zu erschließen. In diesem Dokument wird beispielhaft die Erkennung des Alters und des Geschlechts des Sprechers beschrieben. Die zugrunde liegenden Prinzipien können jedoch auch auf andere biologische und mentale Sprechereigenschaften angewendet werden, wie beispielsweise die Körpergröße ([3], [4]) oder der emotionale und affektive Zustand ([5]).

Andere veröffentlichte bisherige Forschungen [5] beschreiben ein Experiment zur Identifikation von Merkmalen in der Sprache, auf deren Basis die kognitive Belastung des Sprechers eingeschätzt werden kann. Das zugrunde liegende Szenario ist das Folgende: Ein mobiles Assistenzsystem soll einen Reisenden auf seinem Weg durch einen Großflughafen begleiten. Es ist zu erwarten, dass der Reisende in erhöhtem Maße kognitiv belastet ist, weil er sich die Gate-Nummer und die Boarding-Zeit merken muss und weil eine Fülle an Informationen am Flughafen auf ihn einwirkt. Außerdem steht er möglicherweise unter Zeitdruck, weil er in der kurzen Zeit bis zum Abflug nicht nur das Gate finden, sondern auf dem Weg dahin noch ein Geschenk kaufen möchte. Das System soll diese Belastung erkennen und bei der Erzeugung von Weghinweisen berücksichtigen. Das Experiment simuliert die Situation am Flughafen durch ein komplexes Doppelaufgabenexperiment, bei dem die Probanden künstlich unter kognitive Belastung und Zeitdruck gesetzt werden und dabei Anfragen an ein Assistenzsystem stellen, wie: "Ich muss noch mein Baby wickeln - wie komme ich zum nächsten Wickelraum?" Als Ergebnis des Experiments konnte ein Liste von Merkmalen herausgestellt werden, anhand derer sich die Belastung in der Sprache manifestiert: langsamere Artikulationsgeschwindigkeit, mehr und längere Sprechpausen und insbesondere ein erhöhtes Vorkommen so genannter Disfluenzen (z. B. Selbstkorrekturen, Wiederholungen, Satzabbrüche oder Fehlansätze).

Der Hauptuntersuchungsgegenstand von [6] ist die Entwicklung eines Verfahrens zur Nutzung der in der Sprache enthaltenen paralinguistischen Informationen, um das Sprecheralter und - geschlecht einzuschätzen. Die technischen Rahmenbedingungen werden durch ein mobiles natürlichsprachliches Dialogsystem gegeben, welches durch die Integration eines solchen Verfahrens zu einem nicht intrusiven Aufbau eines Benutzermodells befähigt wird {vgl. z.B. auch [7]; [8]). Nachfolgend wird dieses System als AGENDER-System bezeichnet.

In Müller, C. (2006). Zweistufige kontextsensitive Sprecherklassifikation am Beispiel von Alter und Geschlecht [Two-layered Context-Sensitive Speaker Classification on the Example of Age and Gender]. Akademische Verlagsgesellschaft Aka, Berlin wurde ein Verfahren zur automatischen Erkennung des Sprecheralters und -geschlechts ausführlich beschrieben. Dort wurden jedoch ausschließlich Merkmale verwendet, die sich unmittelbar aus der Stimmaltersforschung ableiten ließen: Jitter und Shimmer sowie die Harmonizität als Merkmale der Stimmqualität (die im Alter nachlässt), Sprechpausen (die durch geringere kognitive Leistungen mit zunehmenden Alter zunehmen), Artikulationsgeschwindigkeit (die aus gleichem Grund abnimmt) und die Stimmgrundfrequenz (Pitch), die in erster Linie ein Unterscheidungsmerkmal zwischen weiblichen und männlichen Sprechern darstellt, jedoch auch für die Alterserkennung relevant ist. Eine Kombination dieser Merkmale mit sogenannten short-term cepstrals (Repräsentation des Spektrums, die bei der Spracherkennung und Sprechererkennung eingesetzt wird), wurde hier allerdings nicht untersucht.

In Metze, F., Ajmera, J., Englert, R., Bub, U., Burkhardt, F., Stegmann, J., Müller, C., Huber, R., Andrassy, B.,

Bauer, J., and Littel, B. (2007). Comparison of Four Approaches to Age and Gender Recognition for Telephone Applications. In Proceedings of the 32nd International Conference on Acoustics, Speech, and Signal Processing (ICASSP 2007). Honolulu, Hawaii findet sich eine Kurzbeschreibung von Müller (2006). Außerdem wurden hier noch weitere Verfahren zur Stimmalterserkennung beschrieben. Das erfolgreichste System in dieser vergleichenden Studie basierte auf einem Verfahren, bei dem Phonerkenner für die unterschiedlichen Altersklassen trainiert werden. Die Entscheidung, zu welcher Klasse eine gegebene Sprachprobe (wahrscheinlich) gehört, wurde dann auf Basis der Konfidenzwerte dieser Phonerkenner gefällt. Das Verfahren hat sich allerdings in der Praxis nicht bewährt, da für das Training manuell annotierte Sprachdaten benötigt werden, die nur unter großem finanziellen Aufwand herzustellen sind. In Metze et al (2007) wurde darüber hinaus erstmals ein Verfahren auf Basis der oben erwähnten short-term cepstrals beschrieben. Allerdings wurden hier wiederum die expliziten Merkmale aus der Stimmaltersforschung nicht berücksichtigt.

Anwendungen:

Die Sprecherklassifikation, wie beispielsweise die Erkennung von Sprecheralter und -geschlecht, kann als eine Methode zur nicht-intrusiven Akquise eines Sprechermodells angesehen werden. Der Mobile ShopAssist [9] z.B. ist eine Pocket-PC Anwendung, die dazu dient, die Nutzung von natürlicher Sprache in einer typischen Einkaufsumgebung zu demonstrieren. Ein zentrales Thema dieser Applikation ist die mobile und multimodale Interaktion, die in Form von Gesten, Sprache, Handschrift und einer Kombination aus diesen bestehen kann. Der Personal Navigator [10] ist bezüglich der Interaktionstechnik eine sehr ähnliche Anwendung: Die Benutzer können durch eine Kombination von Sprache und Gesten Weganfragen stellen oder sich Informationen über nahe liegende Gebäude geben lassen.

Auf Basis des Benutzermodells, das von AGENDER zur Verfügung gestellt wird, kann der Einkaufsassistent eine spezifische Auswahl von Produkten treffen - im Fall von Digitalkameras kann er beispielsweise, wenn ein Sprecher als weiblich erkannt worden ist, zunächst ein Modell präsentieren, dass vom Hersteller speziell für Frauen entwickelt worden ist. Das Navigationssystem kann die Auswahl von alternativen Routen anpassen: Wenn z.B. erkannt worden ist, dass es sich bei dem Sprecher um ein Kind handelt, kann im Fall eines Touristenführers eine Tour durch die Innenstadt mit Sehenswürdigkeiten speziell für Kinder ausgewählt werden, die darüber hinaus möglichst wenige gefährliche Kreuzungen enthält.

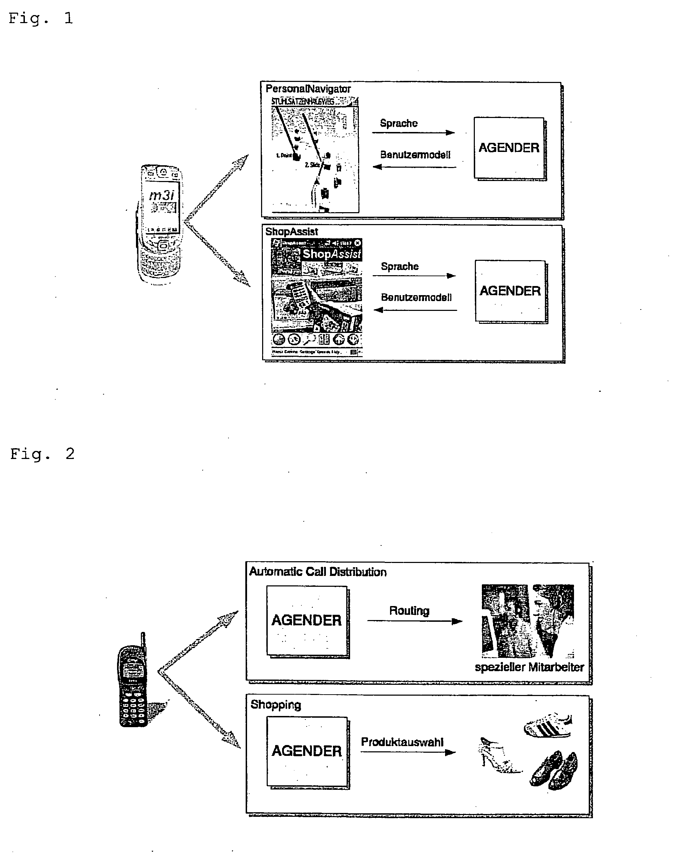

Ein weiterer Anwendungsbereich für die Sprecherklassifikation sind telefonbasierte Dienste (vgl. Figur 2). Ein Callcenter, wie z.B. eine Bestell- oder Service-Hotline, ist für den Betreiber mit hohen Kosten verbunden - entsprechend groß ist das Interesse der Telekommunikationsindustrie als Plattformanbieterin an Lösungen zur Effizienzsteigerung. Ein zentraler Bestandteil der Callcenter-Technik ist die Automatic Call Distribution (ACD), ein computergestütztes System, das Anrufe entgegennimmt und an einzelne Mitarbeiter oder Mitarbeitergruppen verteilt. Dabei werden bei einem Verfahren, das Conditional Routing genannt wird, Anrufe auf Basis von zuvor festgelegten Regeln geschaltet. Bei den heute üblichen ACD-Systemen betreffen diese Regeln zumeist das Verhältnis von Anrufen und Auslastung. In jüngster Zeit sind jedoch auch Ansätze entwickelt worden, Anrufe aufgrund bestimmter von einem System erkannter Emotionen zu routen. Die Grundlage hierfür bilden Emotionserkenner, wie sie z.B. im Rahmen des bereits erwähnten Verbmobil-Projektes entwickelt worden sind (vgl. [11]). Die Möglichkeit der Integration in ein ACD-System besteht auch für die AGENDER-Technologie.

Zu den telefonbasierten Diensten gehören auch die so genannten Interactive Voice Response Systeme, die sich von den Callcenter-Diensten dadurch unterscheiden, dass sie nicht von menschlichen Agenten, sondern von sprachverstehenden Computersystemen geleistet werden. Neben dem bekannten Beispiel der Fahrplanauskunft der Bahn finden weitere Produktinformations- und Einkaufssysteme zunehmend Verbreitung. Die Dimension, auf die sich in diesem Fall die Verbesserungsbestrebungen richten, ist weniger die Kostenverringerung als eher die Steigerung der Kundenzufriedenheit. Die Anwendung für AGENDER, die sich daraus ergibt, ist der ähnlich, die für die mobilen Dialogsysteme beschrieben wurde: Auf Basis des Sprechermodells wird eine kundengruppengerichtete Produktauswahl getroffen und gleichzeitig das Dialogverhalten des Systems angepasst, wie in dem folgenden Beispiel verdeutlicht wird.

Anrufer 1: "Welche Handytarife gibt es?"
AGENDER: Erkennt einen jungen, männlichen Sprecher und gibt diese Information an das System weiter.
System: "Der XY-Tarif ist genau der richtige für dich. Damit kannst du im Monat 150 Frei-SMS versenden",

Anrufer 2: "Welche Handytarife gibt es?"
AGENDER: Erkennt einen älteren, männlichen Sprecher und gibt diese Information an das System weiter.
System: "Wir empfehlen Ihnen den ABC-Tarif. Neben einer geringen Grundgebühr bietet er den Vorteil einer vollen Kostenkontrolle auch im Ausland."

Einsatz von Sprecherklassifikationstechnologien in Sprachdialogsystemen:

Zur Umsetzung der genannten Szenarien werden Dialogsysteme verwendet, die der sprachlichen und analog der multimodalen Interaktion mit mindestens einem Nutzer dienen. Deren allgemeiner Aufbau ist z.B. aus http://www.w3.org/TR/2000/WD-voice-intro-20001204/ bekannt.

Dabei wird international versucht, Sprachdialogsysteme an Eigenschaften einzelner Nutzer zu adaptieren (siehe [17]).

Zur Führung der Nutzer in einem Sprachdialogsystem ist dieses unter Einsatz von Technologien der Sprachsynthese oder der Ausgabe aufgezeichneter Sprache im allg. mit Sprachausgabemodulen ausgestattet, bei denen die Sprachsynthese oder die Ausgabe aufgezeichneter Sprache zum Einsatz kommt. Hier können dem Nutzer mehrere Eingabeoptionen erläutert werden, die er als Antwort auf die für einen bestimmten Dialogzustand ausgegebene Sprache (Sprachprompt) geben kann.

In modernen Sprachdialogsystemen werden zur Erkennung gesprochener Äußerungen sogenannte natürlich-sprachliche Erkenner eingesetzt, die es ermöglichen, dass nicht nur einzelne Wörter, sondern ganze Sätze erkannt und mehrere interessierende Informationen aus einem gesprochenen Satz (z.B. Abflugzeit UND Abflugort UND Zielort) extrahiert werden können. Zusätzlich verfügen Sprachdialogsysteme meist über ein zusätzliches Merkmal, das es erlaubt in einen Sprachprompt hineinzusprechen, ohne dass das Ende des Abspielvorgangs abgewartet werden muss (Barge-In).

Bei der in WO 02/069320 (S.23/24) beschriebenen Adaption von Sprachdialogsystemen liegt der Schwerpunkt nicht auf der Adaption der Dialogstruktur, sondern auf der individuellen Adaption von Spracherkennerparametern an einzelne Nutzer mit nicht durchschnittlichen Ausdrucksweisen.

Auch die WO 01/50455 A ist in diesem Bereich angesiedelt.

Die in der Literatur beschriebenen Systeme verfügen im Allgemeinen über Module für DTMF-Tonerkennung, Spracherkennung und/oder Sprechererkennung. Angedacht sind ebenfalls Module für Emotionserkennung, Sprachenerkennung (language identification) und der Sprecherklassifizierung nach z.B. Alter und/oder Geschlecht. In multimodalen Dialogsystemen kommen im Allgemeinen Module zur Interpretation von Eingaben über Griffel, Maus, Tastatur, Kamera (Gestik) oder verschiedene Endgerätesensoren zum Einsatz.

Bekannt sind Systeme und Verfahren (siehe http://www.nuance.com; "Nuance Verifier, Version 3.0, Developers Guide" sowie http://www.ietf.org/internetdrafts/draft-ietf-speechsc-mrcpv2-05.txt (Seite 6)), die es dem Nutzer nach erfolgreicher Sprecherverifizierung (Verfahren der Sprechererkennung) ermöglichen, Zugriff z.B. auf einen Sprachdienst zu erhalten. Dazu wird über Sprache oder über ein technisches System (siehe auch EP 1249016B1 und Fig. 1) eine Nutzerkennung (9) ermittelt, der mindestens ein biometrischer Abdruck (z.B. Stimmabdruck) zugeordnet wird, mit dem die aktuelle biometrische Probe verglichen wird. Ausgaben erfolgen bei Sprachdialogsystemen im Allgemeinen über Sprachsynthese oder die Wiedergabe aufgezeichneter Sprache. In multimodalen Dialogsystemen erfolgen Informationsausgaben zusätzlich über weitere meist visuelle Technologien (Display, Leuchtanzeigen u.ä.).

Bekannte Verfahren und zugrunde liegende Methoden des maschinellen Lernens:

Der bisherige AGENDER-Ansatz zur Sprecherklassifikation stellt eine Kombination aus datengesteuerten Aspekten und wissensbasierten Aspekten dar. Die Modelle wurden auf der Grundlage von Daten erzeugt, die aus umfangreichen Korpusanalysen stammen. Zu den untersuchten Merkmalen, anhand derer das Sprecheralter und -geschlecht eingeschätzt werden sollen, gehören Charakteristika der Stimme wie mittlere Grundfrequenz, Jitter und Shimmer und Charakteristika des Sprechverhaltens wie Artikulationsgeschwindigkeit und Anzahl und Dauer der Sprechpausen.

Diejenigen Phasen der Mustererkennung, welche die Merkmalsextraktion und die Klassifikation betreffen, werden in AGENDER Erste Ebene genannt. Bezüglich der Klassifikation wurden die folgenden bekannten 5 Methoden des maschinellen Lernens untersucht:

1. Naive Bayes (NB)
2. Gaussian-Mixture-Models (GMMs)
3. k-Nearest-Neighbor (KNN)
4. C 4.5 Entscheidungsbäume (C45)
5. Support-Vector-Machines (SVMs)
6. Künstliche Neuronale Netze (Artificial Neural Networks, ANN).

Da die Methoden Support Vector-Machine und Gaussian Mixture Models für die Beschreibung des beanspruchten Systems von besonderer Bedeutung sind, werden sie in den nachfolgenden Abschnitten detaillierter erläutert.

Zu den Besonderheiten des bisherigen AGENDER-Sprecherklassifikationsansatzes gehörte die Art des Post-Processings, welche als zweite Ebene bezeichnet wird: Mehrere typische Aufgaben der Nachverarbeitung werden in AGENDER mithilfe eines einzigen Mechanismus gelöst, nämlich Dynamischer Bayes'scher Netze (DBNs). Diese kann genutzt werden, um erstens die klassifikationsinhärente Unsicherheit explizit zu modellieren, zweitens Top-Down-Wissen in den Entscheidungsprozess einfließen zu lassen - wie z.B. die Tatsache, dass je nach Kontext die Resultate bestimmter Klassifizierer als zuverlässiger eingeschätzt werden sollten als die anderer - und drittens eine Fusion multipler Klassifikationsergebnisse zu erreichen.

In Tabelle 2 wird die Klassifikationsgenauigkeit des bisherigen Systems, das nachfolgend als Referenzsystem bezeichnet wird, anhand einer Konfusionsmatrix dargestellt. Konfusionsmatrizen stellen ein geeignetes Mittel zur Darstellung der Performanz von Klassifizierern dar, da sie nicht nur die globale Genauigkeit in Form von True Positive Rates ausdrücken, sondern darüber hinaus deutlich machen, welche Klassen im Fehlerfall statt der richtigen gewählt wurden. Hierfür werden in der linken Spalte untereinander die korrekten Klassen aufgeführt; die Zeilen beinhalten die Ergebnisse des Klassifizierers.

Dementsprechend stellt die Diagonale, die hier hervorgehoben wurde, diejenigen Fälle dar, in denen der Klassifizierer eine korrekte Entscheidung getroffen hat. Die Angabe erfolgt in Prozent. Die Definition der Altersklassen ist wie folgt: Als KINDER (K) werden Sprecher bis einschließlich 12 Jahre bezeichnet (die Geschlechter werden nicht unterschieden). Die Klasse JUGENDLICHE (JW, JM) umfasst Sprecher von 13 Jahren bis einschließlich 19 Jahren (W= weiblich, M= männlich), Sprecher zwischen 20 und einschließlich 64 Jahren werden als (jüngere) ERWACHSENE (EW, EM) bezeichnet. Ab 65 Jahren gehören die Sprecher der Klasse SENIOREN (SW, SM) an.

Support-Vector-Machines:

Während die parametrischen Klassifikationsmethoden von einer bekannten Wahrscheinlichkeitsdichte ausgehen und deren Parameter mithilfe der Trainingsdaten schätzen, nehmen Support-Vector-Machines die Form der Diskriminantenfunktionen als linear an und schätzen die Parameter des Klassifizierers. Sie werden daher zu den nichtparametrischen Methoden gezählt (vgl. [12, S. 21 6]). Eine Diskriminantenfunktion, welche eine lineare Kombination der Komponenten von x darstellt, kann beschrieben werden durch

$$g(x) = w^t x + \omega_o \qquad (1)$$

wobei w den Gewichtungsvektor, $w^t x$ das innere Produkt desselben mit dem Merkmalsvektor x, und $\omega_o$ ein Schwellenwertgewicht repräsentiert. Die Entscheidungsregel für den zweikategorialen Fall ist: Entscheide $\omega_1$ wenn g (x) > 0, und $\omega_2$, wenn g (x) < 0. Somit wird x die Kategorie $\omega_1$ zugewiesen, wenn das innere Produkt den Schwellenwert $-\omega_o$ übersteigt, und ansonsten $\omega_2$. Die Entscheidungsgrenze wird durch g(x) = 0 gebildet. Im muitivarianten Fall handelt es sich um eine Entscheidungsoberfläche, eine Hyperebene (vgl. [12, S. 217]).

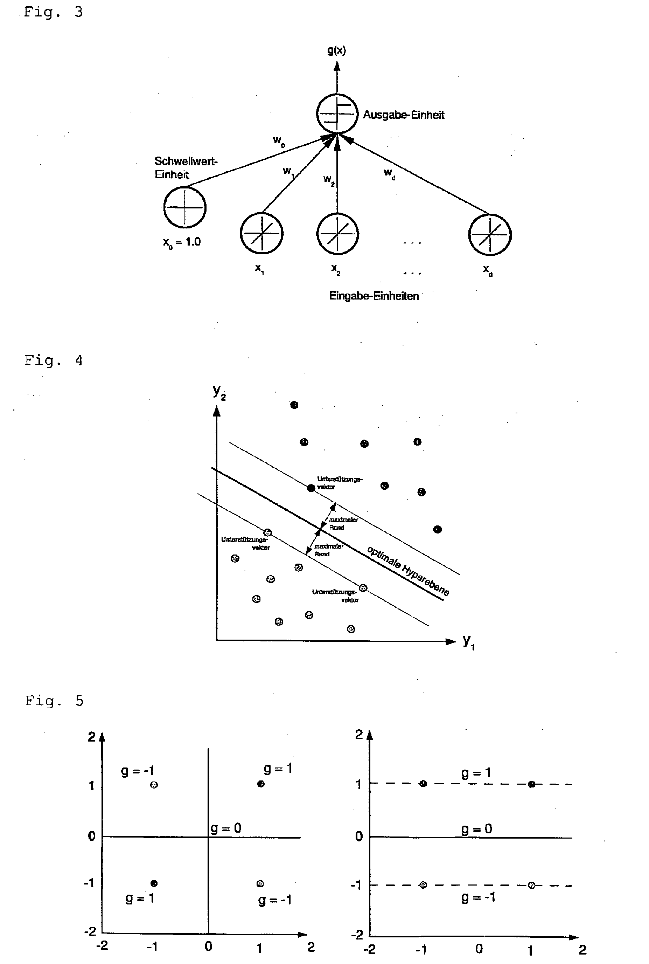

Figur 3 stellt einen einfachen linearen Klassifizierer mit d Eingabeeinheiten (Merkmalsvektor} dar. Die Schwellenwert-Einheit gibt immer den konstanten Wert 1.0 aus. Jeder der Eingabewerte $x_i$ wird mit seinem Gewicht $\omega_i$ multipliziert, so dass an der Ausgabeeinheit $ix_i$ anliegt. Diese gibt in dem Fall +1 aus, falls $w^t x + \omega_o > 0$, und ansonsten -1.

Die trennende Hyperebene H teilt den Merkmalsraum in zwei Halbräume auf: die Entscheidungsregion $R_1$ für $\omega_1$ und die Entscheidungsregion $R_2$ für $\omega_2$. Häufig wird die Ausdrucksweise verwandt, alle x in $R_1$ seien auf der positiven Seite von H und alle x in $R_2$ seien auf der negativen Seite. Die Lage von H wird bestimmt durch das Schwellenwertgewicht w0 und die Neigung durch den Gewichtungsvektor w.

Der positive bzw. negative Wert von g(x) stellt ein algebraisches Maß für die Distanz von x zu H dar, und zwar durch

$$r = \frac{g(\mathbf{x})}{\|\mathbf{w}\|}, \qquad (2)$$

wobei w die Euklidische Norm von w denotiert, also $\sqrt{\omega^t \omega}$

Gleichung 1 auch ausgedrückt werden durch

$$g(\mathbf{x}) = w_0 + \sum_{i=1}^{d} w_i x_i. \qquad (3)$$

Bei linearen Diskriminantenfunktionen gilt:

$$g(\mathbf{x}) = w_0 + \sum_{i=1}^{d} w_i x_i = \sum_{i=0}^{d} w_i x_i, \qquad (4)$$

wobei gilt $x_o = 1$. Somit kann der erweiterte Merkmalsvektor y beschrieben werden durch Gleichung 5 und analog dazu der erweiterte Gewichtungsvektor a durch Gleichung 6.

$$\mathbf{y} = \begin{bmatrix} 1 \\ x_1 \\ \vdots \\ x_d \end{bmatrix} = \begin{bmatrix} 1 \\ \mathbf{x} \end{bmatrix}. \qquad (5)$$

$$\mathbf{a} = \begin{bmatrix} w_0 \\ w_1 \\ \vdots \\ w_d \end{bmatrix} = \begin{bmatrix} w_0 \\ \mathbf{w} \end{bmatrix}. \qquad (6)$$

Die Diskriminantenfunktion g(x) kann somit in der Form $a^t y$ geschrieben werden.

Angenommen, in der Trainingsdatenbank ist eine Menge von Proben $y_1,...., y_n$ enthalten, von denen einige mit $\omega_1$ etikettiert sind und einige mit $\omega_2$. Diese Proben sollen benutzt werden, um die Gewichte a in der linearen Diskriminantenfunktion $g(x) = a^t y$ zu bestimmen. Wenn es ein a gibt, für das alle Trainingsdaten korrekt klassifiziert werden, heißen diese linear trennbar (vgl. [12, S. 223f]). In dem zweikategorialen Fall können alle Proben $y_1$ mit den Etiketten $\omega_2$ durch $y_1$ ersetzt werden, Gesucht wird dann nach einem Gewichtungsvektor a, so dass gilt: $a^t y_i > 0$ für alle Trainingsdaten. Ein solcher Vektor wird Trennvektor oder Lösungsvektor genannt. Er maximiert in der Regel die minimale Distanz der Proben zur Hyperebene H, wobei gilt: $a^t y_i \geq b$ für alle i. Die positive Konstante b wird Rand genannt. Support-Vector-Machines (SVMs) basieren auf den Grundideen linearer Klassifizierer mit Rändern, überführen jedoch die Trainingsdaten zuvor in einen höherdimensionalen Raum. Dabei wird von der Annahme ausgegangen, dass mit einer geeigneten nichtlinearen Figur $\gamma(\cdot)$ in eine genügend hohe Dimension die Trainingsdaten zweier Kategorien immer durch eine Hyperebene getrennt werden können (vgl. [12, S. 262]).

SVMs suchen die optimale Hyperebene H, welche diejenige mit dem größten Rand b ist. Die Unterstützungsvektoren (support vectors) sind diejenigen (transformierten) Muster, die den Rand, und damit H, bestimmen (vgl. 4). Wenn die Unterstützungsvektoren gegeben sind, können sämtliche anderen Trainingsdaten aus dem Modell gelöscht werden, ohne dass sich die Position und Orientierung von H ändert [13, S. 190]. Sie bilden gleichzeitig die Muster, die am schwierigsten zu klassifizieren sind (vgl. [12, 5.262j).

Das exklusive ODER (XOR) stellt das einfachste Problem dar, das nicht mit einer linearen Diskriminantenfunktion gelöst werden kann. Dem SVM-Ansatz folgend, werden die Merkmale daher in einem Vorverarbeitungsschritt in eine höhere Dimension abgebildet, in der sie dann linear trennbar sind. [12, S. 264] verwenden für dieses Beispiel die

Transformationsfunktionen $\Gamma = \{1, \sqrt{2}\,x_1, \sqrt{2}\,x_2, \sqrt{2}\,x_1x_2, x_1^2, x_2^2\}$..

Figur 5 (links) stellt den ursprünglichen Merkmalsraum des Problems dar: Die dunklen, roten Punkte gehören zur Kategorie $\omega_1$ und die hellen, grünen Punkte zu $\omega_2$. Die vier Trainingspunkte werden mithilfe von r in einen sechsdimensionalen Raum abgebildet, so dass sie durch die Diskriminantenfunktion $g(x) = x_1x_2$ trennbar sind. In Figur 5 (rechts) wird eine zweidimensionale Projektion dieses Raums dargestellt. Aufgrund der starken Symmetrie des Problems sind alle vier Merkmale Unterstützungsvektoren (vgl. [12, S.264f]).

Aus diesem Beispiel ist deutlich geworden, dass ein zentraler Schritt bei der Konstruktion einer SVM die Wahl einer geeigneten Menge r ist. Sie ist oftmals abhängig von der Domänenkenntnis des Designers. Ansonsten werden häufig polynominale, Gauß'sche oder andere elementare Funktionen gewählt. [13, S. 188f] geben ein Beispiel an, bei dem die ursprüngliche Menge von Attributen durch eine n-fache Faktorisierung transformiert wird. Für zwei Attribute und n = 3 wäre dies

$$\mathbf{y} = w_1 x_1^3 + w_2 x_1^2 x_2 + w_3 x_1 x_2^2 + w_4 x_2^3. \tag{7}$$

Die Dimensionalität des abgebildeten Raums kann beliebig hoch sein, wird jedoch in der Praxis durch rechentechnische Ressourcen beschränkt. Für eine Transformation von ursprünglich zehn Merkmalen mit n = 5 müsste der Lernalgorithmus über 2000 Koeffizienten bestimmen (vgl. ebd.).

Ein Vorteil des SVM-Ansatzes besteht darin, dass er im Allgemeinen weniger anfällig für Overfitting-Probleme ist als andere Methoden. Nach [13.S.191] entstehen diese immer dann, wenn die Modelle instabil sind, d.h. sich die Entscheidungsgrenzen mit der Veränderung weniger Instanzen verschieben. Die Hyperebene mit dem größten Rand bleibt jedoch relativ stabil, denn sie ändert sich nur dann, wenn Unterstützungsvektoren hinzukommen oder gelöscht werden. Das gilt auch für einen hochdimensionalen Raum, der durch eine nichtlineare Transformation gespannt wird. Die Unterstützungsvektoren sind globale Repräsentanten der gesamten Trainingsdatenbank. Es gibt in der Regel nur wenige von ihnen, was eine geringe Flexibilität und damit eine geringere Gefahr von Overfitting bedeutet (vgl, [13, S. 191 f]).

Gaussian Mixture Models

Gaussian Mixture Models (Gauß'sche Mixtur-Modelle, GMMs) sind sehr eng mit dem Bayes'schen Klassifizierer verwandt. Sie gelten als ein probabilistisches Modell für multivariate Wahrscheinlichkeitsdichten, die beliebige Dichten (Gauß'sche, Laplace'sche usw.) repräsentieren können. In der Anwendung wird mithilfe von GMMs die zugrunde liegende klassenspezifische Wahrscheinlichkeitsdichte berechnet, auf Basis derer ein Likelihood-Ratio-Klassifizierer dann ein gegebenes Muster einer Kategorie zuweist. Für einen d-dimensionalen Merkmalsvektor x ist die Mixtur-Dichte (mixture-density) definiert als:

$$p(\mathbf{x}|\gamma) = \sum_{j=1}^{M} w_j p_j(\mathbf{x}). \tag{8}$$

Die Wahrscheinlichkeitsdichte ist eine lineare Kombination aus M Gauß'schen Wahrscheinlichkeitsdichten. Die Mixtur-Gewichte $\omega_i$ erfüllen darüber hinaus die Bedingung

$$\sum_{j=1}^{M} w_j = 1. \tag{9}$$

Zusammengenommen werden die Parameter des Modells durch [$\gamma = \{\omega_j\ \mu_j,\ \Sigma_j\}$ denotiert, wobei j=1, ..., M. Auf Basis einer Sammlung von Trainingsproben werden die Parameter mithilfe des iterativen Expectation-Maximizaticn-Algorithmus (EM-Algorithmus) bestimmt. Dieser passt die Parameter des GMMs so an, dass eine monotone Verbesserung der Likelihood des Modells der beobachteten Merkmalsvektoren erreicht wird. Für die Iterationen k und k + 1 gilt beispielsweise $p(x|\gamma_{k+1} > p(x|\gamma_k)$.

Ein GMM kann als hybride Methode zwischen parametrischen und nichtparametrischen Modellen angesehen werden, da - obwohl grundsätzlich Parameter das Verhalten bestimmen - ein hoher Grad an Freiheit beliebige Wahrscheinlichkeitsdichten zulässt.

Gaussian Mixture Models stellen eine gängige Methode zur frame-basierten Klassifikation in der Sprechererkennung und ähnlichen Bereichen dar (vgl, z.B. [14], [15], [16]). Die verwendeten Merkmale sind in den meisten Fällen Mel-Frequency-Cepstral-Coefficients (MFCCs), die häufig mit der ersten und zweiten temporalen Ableitung (Delta-MFCCs, DeltaDelta-MFCCs) kombiniert werden. MFCCs sind etablierte framebasierte Merkmale in der Spracherkennung. Als framebasiert werden sie deshalb bezeichnet, weil das kontinuierliche Sprachsignal zunächst mithilfe eines Abtastfensters in Abschnitte (frames) von etwa 10 ms Länge unterteilt wird, um eine Fourier-Transformation durchführen zu können. Die Bezeichnung "Mel" bezieht sich auf die gleichnamige Frequenz-Skala, die sich an der menschlichen Perzeption der Stimmgrundfrequenz orientiert. Die Bezeichnung "cepstral" wird von "cepstrum" abgeleitet, was ein Anagramm von "spectrum" (Spektrum) darstellt. Es soll damit angedeutet werden, dass es sich um Merkmale handelt, die gewissermaßen aus dem "Spektrum des Spektrums" abgeleitet werden. MFCCs werden in Form eines 13-dimensionalen Merkmalsvektors angegeben. Zur Klassifikation wird die Dimension Null in der Regel außer Acht gelassen, da sie ein Maß für die Amplitude des Signals darstellt.

Bekannte Weiterentwicklungen

Aktuelle Weiterentwicklungen des AGENDER-Systems spiegeln die Ergebnisse eines Benchmark-Workshops für die Alters- und Geschlechtserkennung wider. Das erfolgreichste Verfahren in diesem Test berücksichtigte die Tatsache, dass eine Aussage über den Sprecher (bzw. die Sprecherklasse) dann genauer ist, wenn dieser in gewissem Maße das Wissen über den Inhalt der Äußerung zugrunde gelegt wird.

Bei dem erwähnten Modul wird dieses Wissen implizit berücksichtigt, in dem für jede der Sprecherklassen ein separater Phonemerkenner trainiert und die Klassenzuordnung auf Basis des höchsten Konfidenzwertes aller Erkenner getroffen wird. Dieses Verfahren hat jedoch den Nachteil, dass bei einer veränderten Altersklassendefinition die Phonemerkenner neu trainiert werden müssen, was die Verfügbarkeit von genügend phonetisch etikettiertem Trainingsmaterial voraussetzt. Das weiterentwickelte AGENDER-System kommt dagegen unabhängig von der zugrunde liegenden Altersklassendefinition mit nur einem Phonemerkenner aus.

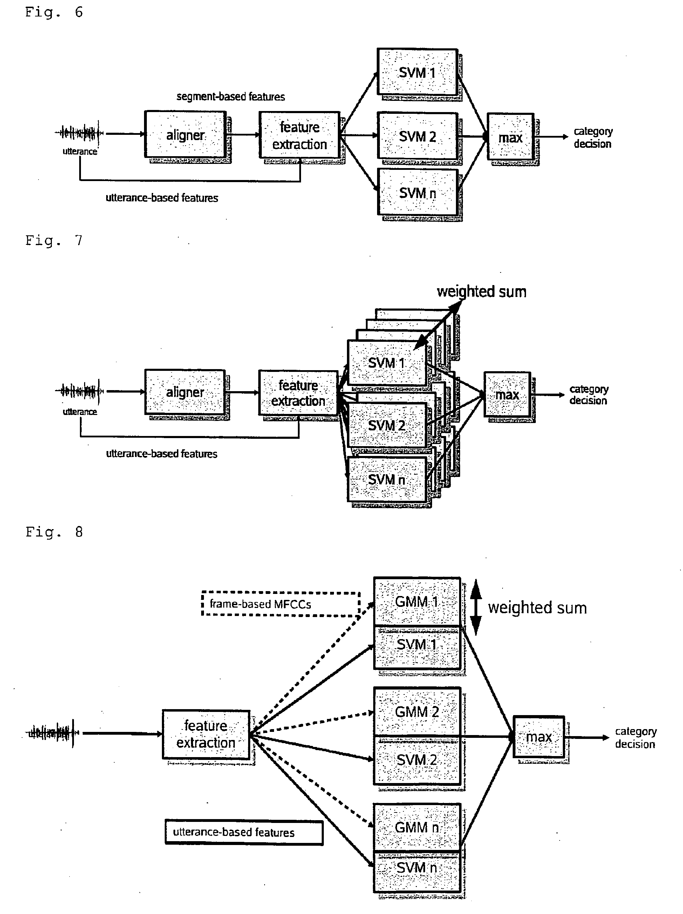

Ein System A wird in Fig 6 schematisch dargestellt. Ein einzelner Phonemerkenner wird als Aligner eingesetzt, der als Front-End für eine segmentbasierte Merkmalsextraktion dient. Zusätzlich werden die herkömmlichen äußerungsbasierten Merkmale verwendet.

Für jede Altersklasse wird eine Support-Vector Machine als binärer Klassifikator trainiert, deren Ergebnisse auf dem Score-Level miteinander verknüpft werden. Im Folgenden werden die einzelnen Komponenten des Moduls näher erläutert.

In allen hier beschriebenen Systemen (A, B) wird zwischen segment- und äußerungsbasierten Merkmalen unterschieden. Letztere entsprechen den bisher verwendeten Merkmalen, also beispielsweise pitch_mean (mittlere Grundfrequenz), jitter_ppq (Mikrovariationen der Frequenz nach dem PPQ-Verfahren) oder shimmer_aq11 (Mikrovariationen der Amplitude nach dem APQ11-Verfahren). Sie werden jeweils durch einen einzelnen Wert für eine gegebene Äußerung repräsentiert. Insgesamt wurden bisher siebzehn dieser Merkmale verwendet, der gesamte Merkmalsvektor war daher 17-dimensional.

Die segmentbasierten Merkmale unterscheiden sich dahin gehend, dass für jedes Segment (Phonem) ein Wert ermittelt wird. Es wurden Studien zu einer Reihe verschiedener segment-basierter Merkmale durchgeführt: Formantenfrequenzen (F1 bis F5), die segment-basierten Varianten der bisherigen Merkmale sowie MFCCs (mit und ohne Delta-MFCCs). Im Gegensatz zu den beiden zuerst genanten Varianten, konnte unter Verwendung der MFCCs eine deutliche Verbesserung der Ergebnisse erzielt werden, insbesondere in Kombination mit einer Auswahl der bisherigen, äußerungsbasierten Merkmale (vor allen Dingen Pitch). Dieses Resultat ist damit zu erklären, dass MFCCs Merkmale darstellen, die mit der Vokaltrakt-Konfiguration des Sprechers korrelieren, jedoch nicht mit den Eigenschaften des Anregungssignals. Letztere werden dagegen durch die bisherigen Merkmale repräsentiert, da neben Pitch auch die Merkmale Jitter und Shimmer auf der Grundfrequenz basieren.

Das Inventar der segment-basierten Merkmale umfasst MFCC_0 bis MFCC_12, was bei einem zugrunde liegenden Inventar von 50 Phonemen einem 650-dimensionalen Merkmalsvektor entspricht. Hinzu kommen je nach individueller Konfiguration der Modelle fünf bis zehn "traditionelle" Merkmale.

Auf Basis der Beginn- und Endmarkierungen eines bestimmten Phonems, die der Ausgabe des Aligners entnommen werden, wird die Äußerung in Segmente (Phoneme) aufgeteilt. Für jedes der Phoneme wird der Median von MFCC_0 bis M FCC_12 berechnet. Der Grund für die Verwendung des Medians anstelle des arithmetischen Mittels besteht darin, dass dieser weniger stark von "Ausreißern" beeinflusst wird. Mit diesen ist bei dem gegebenen Verfahren aus zweierlei Gründen zu rechnen: Erstens sind die Markierungen von Beginn und Ende eines Phonems nicht exakt und zweitens werden die Randbereiche eines Phonems durch den Übergang zum vorangehenden bzw. dem nachfolgenden Phonem beeinflusst. Das Beispiel in Tabelle 3 verdeutlicht den Vorzug des Medians gegenüber dem Mittelwert.

Ein ähnliches Ergebnis kann auch unter Verwendung des Mittelwertes erreicht werden, indem dieser auf Basis eines Fensters um das Zentrum des Segments berechnet wird. Es wurden Experimente mit verschieden langen Fenstern durchgeführt. Die besten Ergebnisse wurden mit 60% der Länge des Segments erzielt, der Unterschied zum Median war jedoch marginal. Man beachte an dieser Stelle, dass es nicht in jedem Fall wünschenswert ist, die Randbereiche bei der Berechnung des Wertes außer Acht zu lassen. Es ist sehr wahrscheinlich, dass der Übergang zwischen den Phonemen Sprecher(klassen)spezifische Informationen enthält. Die Verwendung dieser Bereiche als Merkmal setzt jedoch weitere Untersuchungen voraus. In Tabelle 5 wird die Klassifikationsgenauigkeit von System A bei identischem Trainings- und Testmaterial dargestellt. Obwohl die durchschnittliche Genauigkeit nicht signifikant höher ist als bei dem Referenzsystem, ist die Matrix besser balanciert, d.h. die Differenz zwischen der geringsten True-Positive-Rate und der höchsten ist kleiner.

Im Folgenden wird das System B aus Fig. 7 beschrieben. Da nur sehr wenige Äußerungen das gesamte Phoneminventar abdecken, entsteht bei System A ein großer Anteil von "missing values" (fehlenden Werten). System B ist eine Variante, bei der dieses Problem dadurch umgangen wird, dass für jedes der Segmente ein separates Modell erzeugt wird. Wie in Figur 7 dargestellt wird, werden die Modelle anschließend auf dem "Score-Level" miteinander verknüpft. Tabelle 7 fasst die Klassifikationsgenauigkeit von System B zusammen: Die durchschnittliche Genauigkeit ist höher als bei System A - allerdings wurde diese Verbesserung auf Kosten der Ausgeglichenheit erzielt. Der Nachteil von System B besteht darin, dass eine Vielzahl von Modellen erforderlich ist, was sich sowohl auf das Laufzeitverhalten des Systems als auch auf die Wartbarkeit des Systems negativ auswirkt.

Überblick über die Erfindung:

Wesentliche Aufgabe der vorliegenden Erfindung ist nicht nur die Verbesserung der Genauigkeit der Sprecherklassifizierung bei Verringerung der Fehlerrate, sondern ebenfalls die Erarbeitung einer Methode zur Erhöhung der Effizienz des Klassifizierungsprozesses.

Gelöst wird diese Aufgabe durch ein Verfahren und eine Vorrichtung mit den Merkmalen der unabhängigen Ansprüche.

In den nachfolgenden Abschnitten werden drei verschiedene Verfahren beschrieben, die in den neuesten Studien miteinander verglichen wurden (Systeme A, B und C). Beansprucht wird das System C, welches in einem weiteren Abschnitt genau beschrieben wird.

Durch das erfindungsgemäß beschriebene mehrstufige, kombinierte Verfahren ergibt sich im Vergleich zum separaten Einsatz der Language-Identification eine wesentliche Verringerung der Fehlerrate bei der Klassifizierung der gesprochenen Sprache in Sprachdialogsystemen. Vorteil ist, dass keine zusätzlichen Ressourcen benötigt werden, sondern nur durch zusätzlichen kombinierten Einsatz der ohnehin in Sprachdialogsystemen vorhandenen Spracherkennungssysteme verbesserte Erfolgsraten für die Erreichung des Endergebnisses erzielt werden.

Figurenbeschreibung:

Im Folgenden werden die Figuren kurz beschrieben ohne, dass diese eine Einschränkung des Schutzumfanges darstellen. Es zeigt:

Fig 1    System AGENDER im Anwendungsszenario "Adaptive mobile Systeme" am Beispiel von m3i PersonalNavigator und m3i ShopAssist

Fig. 2    System AGENDER im Anwendungsszenario "Callcenter" am Beispiel von Service Hotline und Shopping System

Fig. 3    Ein einfacher linearer Klassifikator nach [12, S.216]

Fig. 4    Entscheidungsgrenze, Rand und Unterstützungsvektoren einer SVM nach [12, 5.262] Y2

Fig. 5    Links: ursprünglicher Merkmalsraum des XOR-Problems. Rechts: Projektion des in einen sechsdimensionalen Raum überführten Merkmalsraums. x-Achse: 'J x1, y-Achse: 2 xlx2. Die Entscheidungsgrenze ist nunmehr linear (vgl. [12, 5.264])

Fig. 6    Schematische Darstellung des Systems A zur Sprecherklassifikation

Fig. 7    Schematische Darstellung von System B

Fig. 8    Schematische Darstellung einer bevorzugten Ausführungsform des beanspruchten Systems C

Fig. 9    Schematische Darstellung eines Systems D

Fig. 10    Schematische Darstellung eines Systems E mit Speicher

Fig. 11    Schematische Darstellung eines Systems F

Fig. 12    Schematische Darstellung eines Dialogsystems mit implementierter Sprecherklassifikation

Tab. 2    zeigt die Klassifizierungsgenauigkeit des Referenzsystems

Tab. 3    zeigt den Mittelwert gegenüber Median für eine Folge von Werten mit Ausreißern

Tab. 5    zeigt die Klassifikationsgenauigkeit von System A

Tab. 7    zeigt die Klassifikationsgenauigkeit von System B

Tab. 9    zeigt die Klassifikationsgenauigkeit von System C

**Beschreibung der Ausführungsformen:**

Das in Figur 8 schematisch dargestellte System C kommt mit zwei Modellen pro Klasse (z.B. Altersklasse oder Geschlecht) aus: Eines ist die SVM auf Basis der äußerungsbasierten Pitch-Merkmale aus System B. Das andere ist ein Modell, das zwar nach wie vor auf den MFCCs basiert, diese jedoch "frame-by-frame" verarbeitet statt als Durchschnittswert (order Median) eines Segmentes. Daher wurde statt eines SVM ein GMM eingesetzt, eine Methode, die in dem Bereich der Sprecherklassifikation erfolgreich zur frame-basierten Verarbeitung der Sprache eingesetzt wird (siehe oben). Durch die frame-basierte Verarbeitung des Signals kann auf ein Segmentierungs-Frontend verzichtet werden, was sich positiv auf die Komplexität und die Klassifikationsgeschwindigkeit des Systems auswirkt.

Beansprucht wird somit die Kombination von mindestens einer SVM je Sprecherklasse mit mindestens einem GMM je Sprecherklasse, das auf MFCC basiert, die "frame-by-frame" verarbeitet werden.

GMMs auf Basis von MFCCs (Delta- und Delta-Delta-MFCCs) wurden auch bereits in Systemen zur Sprecherklassifikation eingesetzt. Ein Nachteil besteht darin, dass MFCCs zwar ein geeignetes Maß zur Modellierung der Eigenschaften des menschlichen Vokaltraktes darstellen, die Eigenschaften des Anregungssignals jedoch außer Acht lassen (die ebenfalls sprecherspezifische Informationen enthalten). Pitch-Merkmale {Merkmale, die auf der Stimmgrundfrequenz basieren), sind andererseits geeignet, um die Eigenschaften des Anregungssignals zu modellieren. Verschiedene statistische Derivate von Pitch wurden ebenfalls bereits in Systemen zur Sprecherklassifikation eingesetzt (vgl. [6]). In dem hier beschriebenen Verfahren wurde jedoch erstmals für die Anwendung der Sprecherklassifikation eine Kombination von MFCCs und Pitch-basierten Merkmalen verwendet.

Ein wichtiger Parameter bei der Entwicklung eines GMMs für eine bestimmte Anwendung ist die Anzahl der Mixturen (auch Gauß'sche genannt). Eine größere Anzahl von Mixturen modelliert in der Regel das Trainingsmaterial besser, birgt jedoch die Gefahr des "Overfittings", was bedeutet, dass das Modell eine unbefriedigende Klassifikations-Genauigkeit bei bisher ungesehenen Beispielen zeigt. Während bei der Sprechererkennung in der Regel bis zu 1024 Mixturen verwendet werden, erfordert das gegebene Klassifikationsproblem eine stärkere Generalisierung und daher eine bedeutend kleinere Anzahl.

Experimente mit 16, 32, 64, 96 und 128 Mixturen wurden durchgeführt. Die besten Ergebnisse wurden mit einer Anzahl von 96 erzielt. Die frame-basierten GMMs und die äußerungsbasierten SVMs werden auf dem Score-Level miteinander kombiniert. Die Gewichte wurden mithilfe einer klassenspezifischen (d.h. sieben-dimensionalen) vollen Suche in dem Intervall von 0 bis drei und einem Inkrement von 0.1 ermittelt. Die optimalen Gewichte für das gegebene Problem liegen bei GMM + 0,3 * SVM für alle Klassen.

Wie in Tabelle 9 dargestellt wird, ist die durchschnittliche Genauigkeit mit 49.11 % deutlich höher als bei allen anderen Systemen. Gleichzeitig sind die individuellen True-Positive-Rates relativ ausgeglichen.

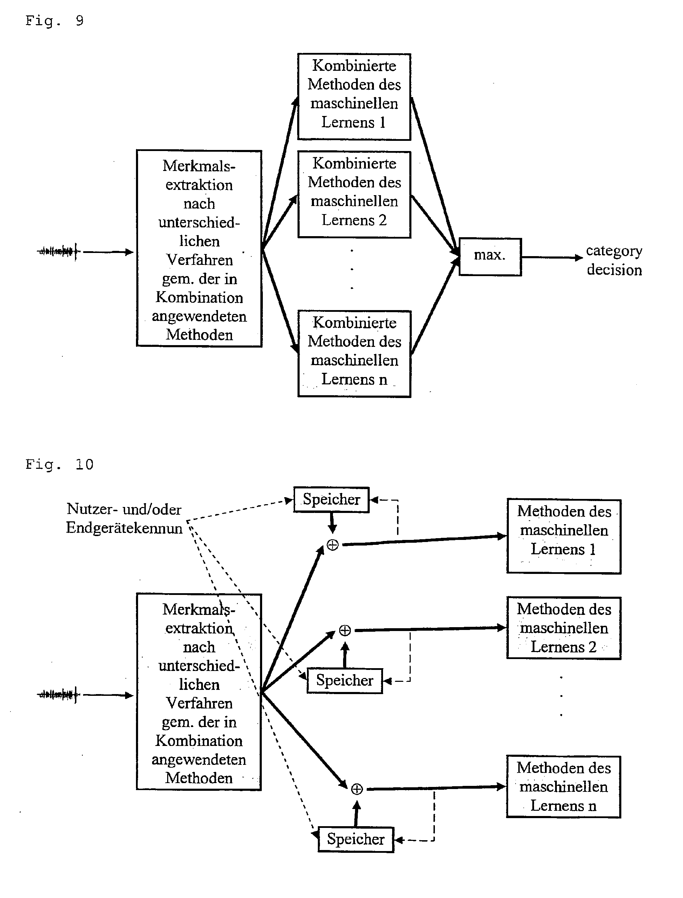

Das zu Beginn dieses Abschnittes beschriebene und beanspruchte Verfahren ist eine vorteilhafte Ausgestaltung eines Verfahrens zur Sprecherklassifikation, das mindestens zwei Verfahren des maschinellen Lernens zum Zweck der Sprecherklassifikation kombiniert. Beispiele für anwendbare Verfahren des maschinellen Lernens sind einleitend schon genannt worden. Beansprucht wird somit ein Verfahren der Sprecherklassifikation, in dem mindestens zwei, vorzugsweise drei Verfahren des maschinellen Lernens kombiniert werden (Fig. 9). Dabei werden je nach den einzelnen Lernverfahren, die miteinander kombiniert werden, wie beispielhaft schon in Fig. 8 für zwei kombinierte Verfahren aufgezeigt, aus dem Sprachsignal Merkmale abhängig von den in den einzelnen Verfahren benötigten Merkmalseigenschaften extrahiert, verarbeitet und dem entsprechenden Verfahren des maschinellen Lernens zugeführt.

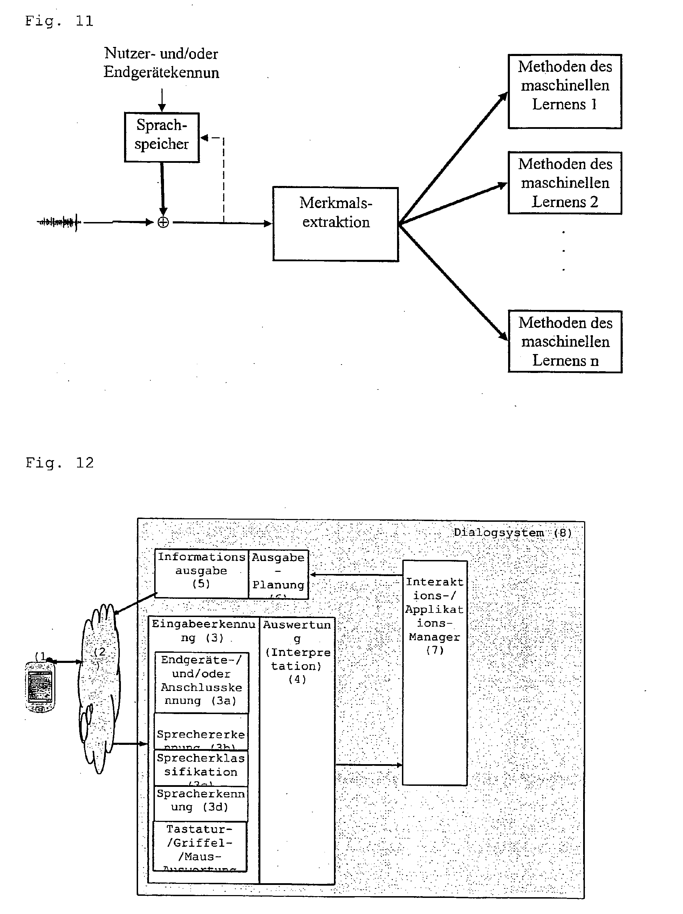

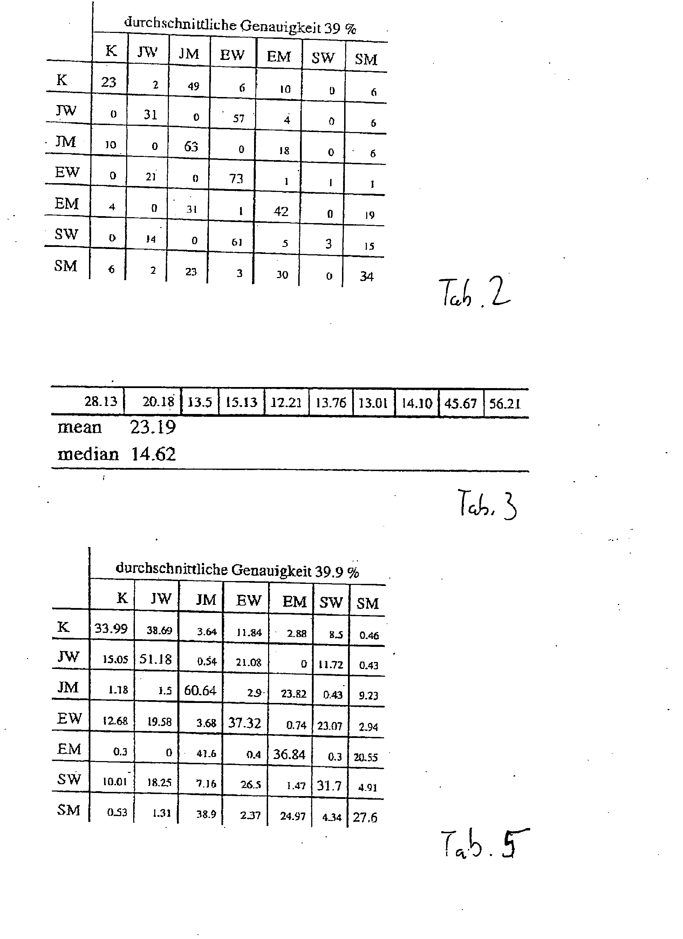

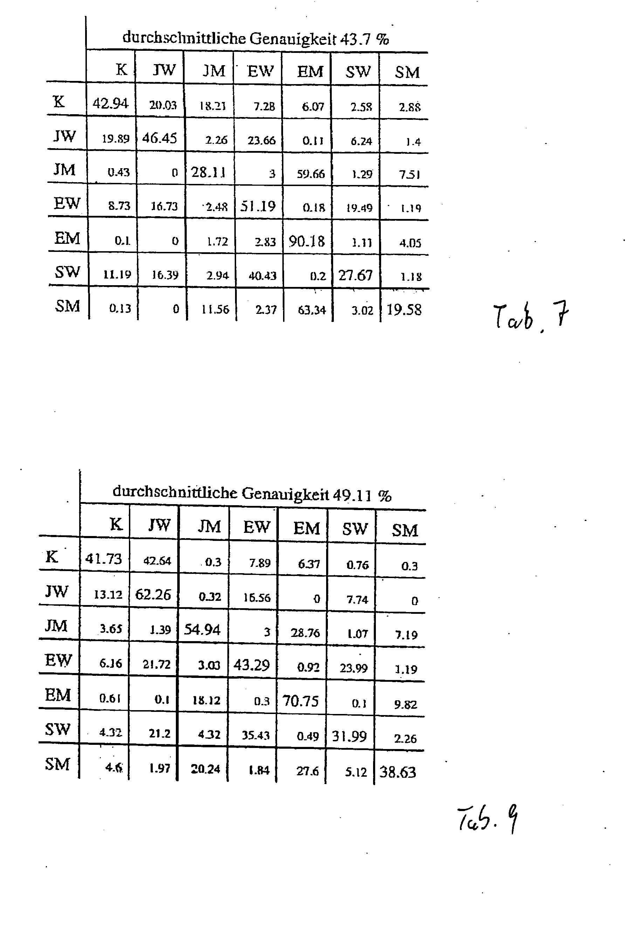

Wie einführend schon beschrieben, kann ein derartiges Verfahren nun in ein Sprachdialogsystem eingebunden werden, das an ein für die Übermittlung von Sprachdaten (z.B. Festnetz, Mobilfunknetz, Internet u.ä.) geeignetes Netz angeschlossen ist (Fig. 12).

Die je nach angewandten Lernverfahren ermittelten Merkmale des Nutzers können nun mit der in dem Dialogsystem ermittelten Kennung des mit dem Dialogsystem in Verbindung getretenen Endgerätes (z.B. HLR, CLI, IMEI, SIM-Kennung, IP-Adresse, Rufnummer, SIP-Adresse u.ä.) bzw. einer vorher vereinbarten und über das Dialogsystem eingegebenen und ggf. verifizierten Kennung verknüpft und z.B. in einer Datenbank gespeichert werden (siehe Fig. 10, Speicher l...n). Mindestens eine dieser Kennungen, insbesondere die zuletzt genannte Kennung kann zusätzlich durch Einsatz der Sprecherverifizierung (3b in Fig. 12) oder anderer bekannter Verifizierungsverfahren als einem Nutzer zugehörig verifiziert werden. Damit können bei einer wiederholten Verbindung mit dem Dialogsystem die unter der über den Verifizierungsprozess einem Nutzer eindeutig abgespeicherten und zugeordneten Merkmale zu den in der laufenden Interaktion erfassten Sprach- und Stimmmerkmalen hinzugefügt werden, womit sich eine größere Menge an Merkmalen und somit eine größere Sicherheit bei der Bestimmung der Sprecherklasse ergibt.

Ähnlich kann mit der Sammlung von Sprachrohdaten (Fig. 11) verfahren werden, die bei einer erneuten Verbindung mit dem Dialogsystem den erneut erfassten Rohdaten hinzugefügt werden. Diese nun ergänzten Daten werden wiederum unter der gegebenen Kennung abgespeichert und der Merkmalsextraktion zugeführt.

Die Figur 12 zeigt den grundsätzlichen Aufbau des Dialogsystems 8 auf. Ein Endgerät 1 des Nutzers eines Sprachdialogssystems baut über ein Verbindungsnetz 2 (drahtlos und/oder drahtgebunden, verbindungsorientiert und/oder paketbasiert) eine Verbindung auf.

Über eine Eingabeerkennung 3 wird einerseits die Ermittlung einer Endgeräte-/Anschlusskennung 3a durchgeführt und andererseits eine Sprechererkennung bzw. Sprecherverifizierung 3b vorgenommen, vorzugsweise auch zur Durchführung eines Dialogs zur Verifizierung des Nutzers.

Dann erfolgt eine 3c Sprecherklassifikation gem. den beanspruchten Verfahren und ggfs. eine 3d Spracherkennung. Zusätzlich kann noch eine Tastatur- und/oder Griffel- und/oder Maus- und/oder Bewegungserfassung 3e erfolgen, vorzugsweise auch zur Durchführung eines Dialogs zur Verifizierung des Nutzers.

Die so vorgenommenen Eingaben werden in der Eingabeauswertungs- und/oder-Interpretationseinheit 4 überprüft. Dies erfolgt in der Regel durch die beanspruchte Bearbeitungseinheit, die ein Prozessor und/oder ein ASIC ist.

Der Interaktions/Applikationsmanager 7 empfängt die interpretierten Daten von der Interpretationseinheit 4 und gibt diese an Anwendungen weiter, die sich angemeldet haben und die die Ergebnisse für weiter verarbeiten, wie z.B. das Dialogsystem, Datenbanken, Authenfizierungssysteme etc. Danach erfolgt eine Weiterleitung an das Ausgabeplanungssystem 6 und abschließend eine optische oder akustische Ausgabe 5.

Literatur Referenzen

[1] Wolfgang Wahlster, Verbmobil: Foundations of Speech-To-Speech Translation, Eliis Horwood Series in Artificial Intelligence, Springer, Berlin - Heidelberg -New York, 2000.

[2] Christian Müller, "Multimodal Dialog in a Pedestrian Navigation System," in Proceedings of ISCA Tutorial and Research Workshop on Multi-Modal Dialogue in Mobile Environments, Kloster Irsee, Germany, 2002, pp.42-44,

[3] Sorin Dusan, "Estimation of Speaker's Height and Vocal Tract Lenghl from Speech Signal," in Proceedings of 9th European Conference on Speech Communication and Technology Unterspeech 2005), Lisbon, 10 Portugal, 2005.

[4] B.L. Pellom and J.H.L. Hansen, "Voice analysis in adverse conditions: The Centennial Olympic Park bombing 911 call," in Proceedings of the 40th IEEE Midwest Symposium an Circuits and Systems, Sacramento, CA, 1997,

[5] Christian Müller, Barbara Großmann-Hutter, Anthony Jameson, Ralf Rummer, and Frank Wittig, "Recognizing Time Pressure and Cognitive Load on the Basis of Speech: An Experimental Study," in UM2001, UserMadeling. • Proceedings of the Eighth international Conference, M ath ias Bauer, Piotr Gmytrasiewicz, and Julita Vassileva, Eds., New York - Berlin, 2001, pp. 24 - 33, Springer.

[6] Christian Müller, Zweistufige kontextsensitive Sprecherklassifikation am Beispiel von Alter und Geschlecht, Ph.D. thesis, Fachbereich 6.2 Informatik, Universität des Saarlandes, Deutschland, 2005.

[7] Christian Müller, F. Wittig, and J. Baus, "Exploiting Speech for Recagnizing Elderly Users to Respond to their-Special Needs," in Proceedings of the Eighth European Conference an Speech Communication and Technology (Eurospeech 2003), Geneva, Switzerland, 2003, pp. 1305 - 1308.

[8] Christian Müller and Frank Wittig, "Speech as a Source for Ubiquitous User Modeling," in Proceedings of the Workshop on User Modeling in Ubiquitaus Computing in conjunction with the Ninth International 25Conference on User Modeling (UM 2003), Pittsburgh, USA, 2003, pp. 46 - 50.

[9] Rainer Wasinger, Antonio Krüger, and Oliver Jacobs, "Integrating Intra and Extra Gestures into a Mobile and Multimodal Shopping Assistent," in Proceedings of the 3rd International Conference on Pervasive Computing (Pervasive), Munich, Germany, 2005, pp. 297-314.

[10] Rainer Wasinger, Christoph Stahl, and Antonio Krüger, "M3I in a Pedestrian Navigation & ExplorationSystem," in Proceedings of the Fourth international Symposium on Human Computer Interaction with Mobile Devices, Pisa, Italy, 2003, pp. 481-485.

[11] A. Batliner, R. Huber, H. Niemann, E. Nöth, J. Spilker, and K. Fischer, The Recognition of Emotion, pp. 122-130, Springer, New York- Berlin, 2000.

[12] Richard 0. Duda, Peter E. Hart, and David G. Stark, Pattern Classification, Wiley-Interscience, New York, USA, 2. edition, 2000.

[13] Ian H, Witten and Eibe Frank, Data Mining: Practical Machine Learning Tools and Techniques With Java Implementations, Morgan Kaufmann Publishers, San Mateo, CA, USA, 1999.

[14] D. A. Reynolds, T. F. Quatieri, and R. B. Dunn, "Speaker Verification Using Adapted Gaussian Mixture Models," Digital Signal Processing, vol. 10, pp. 19-- 41, 2000.

[15] D.E. Sturim, D.A. Reynolds, R.B. Dunn, and T.F. Quatieri, "SpeakerVerification using Text-Constrained Gaussian Mixture Models," in Proceedings of the International Conference an Acoustics, Speech, and Signal Processing (ICASSP 2002), Orlando, FL, 2002, pp. I: 677-680,1EEE.

[16] C. Miyajima, Y. Hattori, K. Tokuda, T. Masuko, T. Kobayashi, and T. Kitamura, "Speaker identification using Gaussian mixture models based an multi-space probability distribution," in Proceedings of the International Conference an Acoustics, Speech, and Signal Processing (ICASSP 2001), Salt Lake City, Utah, 2001, IEEE.

[17] Hjalmarsson, A., 'Adaptive Spoken Dialogue Systems', Centre for Speech Technofogy, KTH, Jan. 2005

1 Endgerät des Nutzers eines Sprachdialogs, Anrufer
2 Verbindungsnetz (drahtlos und/oder drahtgebunden, verbindungsorientiert und/oder paketbasiert)
3 Eingabeerkennung
3a Ermittlung einer Endgeräte-/Anschlusskennung
3b Sprechererkennung bzw. Sprecherverifizierung, vorzugsweise auch zur Durchführung eines Dialogs zur Verifizierung des Nutzers
3c Sprecherklassifikation gem. der Beschreibung
3d Spracherkennung
3e Tastatur- und/oder Griffel- und/oder Maus- und/oder Bewegungserfassung, vorzugsweise auch zur Durchführung eines Dialogs zur Verifizierung des Nutzers
4 Eingabeauswertung und/oder-interpretation
5 Informationsausgabe
6 Ausgabeplanung
7 Interaktions-/Applikationsmanager
8 Dialogsystem

**Begriffsdefinitionen**

| ANI | Automatic Number Identification |
|---|---|
| ANN | Artificial Neural Networks - Künstliche Neuronale |
| APQ | Amplitude Perturbation Quotient |
| ASR | Automatic Speech Recognition |
| C45 | C 4.5 Entscheidungsbäume (Methode des maschinellen Lernens) |
| CLI | Calling Line Identification |

(fortgesetzt)

| | |
|---|---|
| DBN | Dynamisches Bayes'sches Netz |
| EM-Algorithmus | Expectation-Maximization-Algorithmus |
| GMMs | Gaussian-Mixture-Models (Methode des maschinellen Lernens) |
| Grammatik | Strukturierte Beschreibung möglicher auszuwertender Eingaben durch den Nutzer (z.B. gesprochene Sprache, Texteingaben, Griffel, Gesichtsmimik usw.) |
| HLR | Home Location Register |
| IMEI | International Mobile Equipment Identity |
| KNN | k-Nearest-Neighbor (Methode des maschinellen Lernens) |
| MFCC | Mel-Frequency-Cepstal-Coefficient |
| NB | Naive Bayes (Methode des maschinellen Lernens) |
| PRO | Pitch Perturbation Quotient |
| SIM | Subscriber Identity Module |
| SIP | Session Initiation Protocol |
| | |
| Sprecherklassifizierung | Bestimmung der Zugehörigkeit mindestens eines Sprechers zu einer größeren |
| Sprechererkennung | Authentisierung oder Identifizierung eines Sprechers anhand von Merkmalen der |
| SVM | Support Vector Machine |
| TTS | Text-To-Speech |

**Patentansprüche**

1. Verfahren zur automatischen Sprecherklassifizierung, durch ein digitales System, wobei mindestens zwei unterschiedliche Sprecherklassifikationsverfahren auf digitale Sprachdaten angewandt werden und deren Ergebnisse miteinander kombiniert werden, wobei das erste Verfahren segmentbasierte Merkmale verarbeitet und das zweite Verfahren äußerungsbasierte Merkmale verarbeitet,
wobei das äußerungsbasierte Verfahren mindestens eine Support Vector Machine (SVM) je Sprecherklasse auf Basis von äußerungsbasierten Pitch-Merkmalen einsetzt,
wobei das eingesetzte segmentbasierte Verfahren mindestens ein Gaussian-Mixture-Model (GMM) je Sprecherklasse einsetzt, welches auf Mel-Frequency-Cepstral-Coefficients (MFCCs) basiert, die frame-by-frame verarbeitet werden.

2. Das Verfahren nach dem vorhergehenden Anspruch, wobei die Anzahl von Mixturen zwischen 60 und 170 liegt, vorzugsweise um 96.

3. Das Verfahren nach einem oder mehreren der vorhergehenden Ansprüche, wobei eine Kombination der Sprecherklassifikationsverfahren auf Score Level erfolgt.

4. Das Verfahren nach dem vorhergehenden Anspruch, wobei in die Kombination von SVM und GMM Gewichte einfließen, und die Gewichte mithilfe einer klassenspezifischen Suche bestimmt werden.

5. Das Verfahren nach einem oder mehreren der vorhergehenden Ansprüche, wobei vor der Sprecherklassifikation eine Merkmalsextraktion aus Sprachdaten erfolgt.

6. Das Verfahren nach einem oder mehreren der vorhergehenden Ansprüche, wobei eine Kombination mit Kennungen des Endgerätes erfolgt, das ein System zur Sprecherklassifizierung kontaktiert, um zu der Kennung Informationen über die Sprecherklassifizierung abzulegen, die bei einer erneuten Sprecherklassifizierung berücksichtigt werden.

7. Das Verfahren nach dem vorhergehenden Anspruch, wobei zusätzlich ein Speichern von Sprecherklassifizierungsmerkmalen oder digitalen Sprachrohdaten zu der Kennung erfolgt.

8. Vorrichtung zur automatischen Sprecherklassifizierung, umfassend:

   - ein digitales System, das über eine Schnittstelle Sprachdaten von einer Person erhält;
   - eine Bearbeitungseinheit, die auf die Sprachdaten zugreifen kann, und die so ausgebildet und eingerichtet ist, dass mindestens zwei unterschiedliche Sprecherklassifikationsverfahren auf die Sprachdaten anwendet werden und deren Ergebnisse miteinander kombiniert werden, wobei

   das erste Verfahren segmentbasierte Merkmale verarbeitet und das zweite Verfahren äußerungsbasierte Merkmale verarbeitet,
   wobei das äußerungsbasierte Verfahren mindestens eine Support Vector Machine (SVM) je Sprecherklasse auf Basis von äußerungsbasierten Pitch-Merkmalen einsetzt,
   wobei das eingesetzte segmentbasierte Verfahren mindestens ein Gaussian-Mixture-Model (GMM) je Sprecherklasse einsetzt, welches auf Mel-Frequency-Cepstral-Coefficients (MFCCs) basiert, die frame-by-frame verarbeitet werden.

9. Die Vorrichtung nach dem vorhergehenden Anspruch, wobei die Anzahl von Mixturen zwischen 60 und 170 liegt, vorzugsweise um 96.

10. Die Vorrichtung nach einem oder mehreren der vorhergehenden Vorrichtungsansprüche, wobei durch die Bearbeitungseinheit eine Kombination der Sprecherklassifikationsverfahren auf Score Level erfolgt.

11. Die Vorrichtung nach dem vorhergehenden Anspruch, wobei in die Kombination von SVM und GMM Gewichte einfließen und die Gewichte mithilfe einer klassenspezifischen Suche bestimmt werden.

12. Die Vorrichtung nach einem oder mehreren der vorhergehenden Vorrichtungsansprüche, wobei durch die Bearbeitungseinheit oder andere Mittel vor der Sprecherklassifikation eine Merkmalsextraktion aus Sprachdaten erfolgt.

13. Die Vorrichtung nach einem oder mehreren der vorhergehenden Vorrichtungsansprüche, wobei Mittel vorhanden sind, um eine Kombination der Sprecherklassifizierung mit Kennungen des Endgerätes durchzuführen, das ein System zur Sprecherklassifizierung kontaktiert, um zu der Kennung Informationen über die Sprecherklassifizierung abzulegen, die bei einer erneuten Sprecherklassifizierung berücksichtigt werden.

14. Die Vorrichtung nach dem vorhergehenden Anspruch, wobei auf einem Speicher zusätzlich zu den Sprecherklassifizierungsmerkmalen oder digitalen Sprachrohdaten die Kennungen gespeichert sind.

## Claims

1. A method for automatic speaker classification, through a digital system, wherein at least two different speaker classification methods are applied to digital speech data and their results are combined with each other,
   wherein the first method is processing segment-based features and the second method is processing expression based features,
   wherein the expression based method (SVM) uses at least one Support Vector Machine per speaker class on the basis of utterance-based pitch features ,
   wherein the used segment-based method uses at least a Gaussian mixture model (GMM) per speaker class, which is based on Mel-Frequency Cepstral Coefficients-(MFCC), which are processed frame-by-frame.

2. The method according to the preceding claim, wherein the number of mixtures is between 60-170, preferably by 96.

3. The method according to one or more of the preceding claims, wherein a combination of the speaker classification method is carried out on Score Level.

4. The method according to the preceding claim, wherein in the combination of SVM and GMM weights are incorporated, and the weights are determined using a class specific search.

5. The method according to one or more of the preceding claims, wherein before the speaker classification a feature extraction of the speech data is performed.

**6.** The method according to one or more of the preceding claims, wherein a combination of identifiers of the terminal contacting a system for speaker classification takes place, to store information of the speaker classification in relation to the identifiers, which are taken into account by a new speaker classification.

**7.** The method according to the preceding claim, wherein additionally storing of speaker classification features or digital voice raw data in relation to the identifier is performed.

**8.** An apparatus for automatic speaker classification, comprising:

- A digital system that receives from a person over an interface voice data;
- a processing unit which can access the speech data, and which is designed and arranged in a way that at least two different speakers classification methods are applied to the speech data and the results are combined with each other, wherein the first method processes segment-based features and the second method processes expression based features,

wherein the expression based method (SVM) uses at least one Support Vector Machine on the basis of utterance-based pitch features,

wherein the used segment-based method uses at least a Gaussian mixture model (GMM) per speaker class, which is based on Mel-Frequency Cepstral Coefficients-(MFCC), which are processed frame-by-frame.

**9.** The device according to the preceding claim, wherein the number of mixtures is between 60-170, preferably by 96.

**10.** The device according to one or more of the preceding device claims, wherein a combination of speaker classification methods is carried out on Score Level by the processing unit.

**11.** The device according to the preceding claim, wherein in the combination of SVM and GMM weights are incorporated, and the weights are determined using a class specific search.

**12.** The device according to one or more of the preceding device claims, wherein the processing unit or other means before the speaker classification a feature extraction of the speech data is performed.

**13.** The device according to one or more of the preceding device claims, wherein means are provided to perform a combination of identifiers of the terminal contacting a system for speaker classification takes place, to store information of the speaker classification in relation to the identifiers, which are taken into account by a new speaker classification.

**14.** The device according to the preceding claim, wherein on a memory, in addition to the speaker classification features or digital voice raw data the identifier is stored.


**Revendications**

**1.** Une méthode de classification automatique d'un interlocuteur, grâce à un système numérique, dans laquelle on applique au moins deux méthodes distinctes de classification d'un interlocuteur à des données vocales numériques, avec la combinaison de leurs résultats,
dans laquelle la première méthode traite des caractéristiques à base de segment et la seconde méthode traite des caractéristiques à base d'expressions,
dans laquelle la méthode à base d'expressions (SVM) utilise au moins une Machine Vectorielle de Support par classe d'interlocuteur sur la base des caractéristiques de hauteur basée sur la parole,
dans laquelle la méthode à base de segments utilise au moyen un modèle de mélange Gaussien (GMM) par classe d'interlocuteur, qui est basé sur des coefficients Mel Frequency Cepstral, qui sont traités trame par trame.

**2.** La méthode selon la revendication précédente, dans laquelle le nombre de mélanges de 60 à 170, de préférence de 96.

**3.** La méthode selon l'une ou plusieurs des revendications précédentes, dans laquelle une combinaison du procédé de classification d'un interlocuteur est réalisée sur le score de niveau.

4. La méthode de la revendication précédente, dans laquelle on incorpore des pondérations dans la combinaison SVM et GMM, et les pondérations sont déterminées au moyen d'une recherche spécifique de classe.

5. La méthode selon l'une ou plusieurs des revendications précédentes, dans laquelle l'on réalise une extraction de caractéristique des données vocales préalablement à la classification d'un interlocuteur.

6. La méthode selon l'une ou plusieurs des revendications précédentes, dans laquelle on réalise une combinaison d'identifiants d'un terminal contactant un système pour une classification d'interlocuteurs, afin de stocker de l'information relative à la classification d'interlocuteur relativement aux identifiants, qui sont pris en compte par une nouvelle classification d'interlocuteur.

7. La méthode selon la revendication précédente, dans laquelle on réalise un stockage additionnel des caractéristiques de classification d'interlocuteur ou de données brutes vocales numériques en relations avec l'identifiant.

8. Un dispositif pour la classification automatique d'un interlocuteur, comprenant:

   - Un système numérique qui reçoit des données vocales émanant d'une personne via une interface ;
   - Une unité de traitement qui peut accéder aux données vocales, et qui est construite et disposée de sorte qu'au moins deux méthodes distinctes de classification d'un interlocuteur sont appliquées aux données vocales, avec la combinaison des résultats, dans laquelle la première méthode traite des caractéristiques à base de segment et la seconde méthode traite des caractéristiques à base d'expressions,

   dans laquelle la méthode à base d'expressions (SVM) utilise au moins une Machine Vectorielle de Support par classe d'interlocuteur sur la base des caractéristiques de hauteur basée sur la parole,
   dans laquelle la méthode à base de segments utilise au moyen un modèle de mélange Gaussien (GMM) par classe d'interlocuteur, qui est basé sur des coefficients Mel Frequency Cepstral, qui sont traités trame par trame.

9. Le dispositif selon la revendication précédente, dans lequel le nombre de mélanges de 60 à 170, de préférence de 96.

10. Le dispositif selon l'une ou plusieurs des revendications de dispositif précédentes, dans lequel une combinaison de méthodes de classification d'interlocuteurs est réalisée par l'unité de traitement sur la base d'un score de niveau.

11. Le dispositif selon la revendication précédente, dans laquelle on incorpore des pondérations dans la combinaison SVM et GMM, et les pondérations sont déterminées au moyen d'une recherche spécifique de classe.

12. Le dispositif selon l'une ou plusieurs des revendications de dispositif précédentes, dans lequel l'unité de traitement ou d'autres moyens réalisent une extraction de caractéristique de données vocales préalablement à la classification d'interlocuteur.

13. Le dispositif selon l'une ou plusieurs des revendications de dispositif précédente, dans lequel des moyens sont fournis pour effectuer une combinaison d'identifiants d'un terminal contactant un système pour une classification d'interlocuteur, afin de stocker de l'information relative à la classification d'interlocuteur relativement aux identifiants, qui sont pris en compte par une nouvelle classification d'interlocuteur.

14. Le dispositif selon la revendication précédente, dans lequel on stocke dans de la mémoire l'identifiant en sus des caractéristiques de classification d'interlocuteur ou de données vocales numériques brutes.

Fig. 1

Fig. 2

Fig. 3

Fig. 4

Fig. 5

Fig. 6

Fig. 7

Fig. 8

Fig. 9

Fig. 10

Fig. 11

Nutzer- und/oder
Endgerätekennun

Sprachspeicher

⊕

Merkmalsextraktion

Methoden des
maschinellen
Lernens 1

Methoden des
maschinellen
Lernens 2

Methoden des
maschinellen
Lernens n

Fig. 12

Dialogsystem (8)

Informations
ausgabe
(5)

Ausgabe
–
Planung

Interakt
ions-/
Applikat
ions-
Manager
(7)

Eingabeerkennu
ng (3)

Auswertun
g
(Interpre
tation)
(4)

Endgeräte-/
und/oder
Anschlusske
nnung (3a)

Sprechererke
nnung (3b)

Sprecherklas
sifikation
(3c)

Spracherkenn
ung (3d)

Tastatur-
/Griffel-
/Maus-
Auswertung

(1)

(2)

| | durchschnittliche Genauigkeit 39 % | | | | | | |
|---|---|---|---|---|---|---|---|
| | K | JW | JM | EW | EM | SW | SM |
| K | 23 | 2 | 49 | 6 | 10 | 0 | 6 |
| JW | 0 | 31 | 0 | 57 | 4 | 0 | 6 |
| JM | 10 | 0 | 63 | 0 | 18 | 0 | 6 |
| EW | 0 | 21 | 0 | 73 | 1 | 1 | 1 |
| EM | 4 | 0 | 31 | 1 | 42 | 0 | 19 |
| SW | 0 | 14 | 0 | 61 | 5 | 3 | 15 |
| SM | 6 | 2 | 23 | 3 | 30 | 0 | 34 |

Tab. 2

| 28.13 | 20.18 | 13.5 | 15.13 | 12.21 | 13.76 | 13.01 | 14.10 | 45.67 | 56.21 |
|---|---|---|---|---|---|---|---|---|---|

mean   23.19

median   14.62

Tab. 3

| | durchschnittliche Genauigkeit 39.9 % | | | | | | |
|---|---|---|---|---|---|---|---|
| | K | JW | JM | EW | EM | SW | SM |
| K | 33.99 | 38.69 | 3.64 | 11.84 | 2.88 | 8.5 | 0.46 |
| JW | 15.05 | 51.18 | 0.54 | 21.08 | 0 | 11.72 | 0.43 |
| JM | 1.18 | 1.5 | 60.64 | 2.9 | 23.82 | 0.43 | 9.23 |
| EW | 12.68 | 19.58 | 3.68 | 37.32 | 0.74 | 23.07 | 2.94 |
| EM | 0.3 | 0 | 41.6 | 0.4 | 36.84 | 0.3 | 20.55 |
| SW | 10.01 | 18.25 | 7.16 | 26.5 | 1.47 | 31.7 | 4.91 |
| SM | 0.53 | 1.31 | 38.9 | 2.37 | 24.97 | 4.34 | 27.6 |

Tab. 5

| durchschnittliche Genauigkeit 43.7 % | | | | | | |
|---|---|---|---|---|---|---|
| | K | JW | JM | EW | EM | SW | SM |
| K | 42.94 | 20.03 | 18.21 | 7.28 | 6.07 | 2.58 | 2.88 |
| JW | 19.89 | 46.45 | 2.26 | 23.66 | 0.11 | 6.24 | 1.4 |
| JM | 0.43 | 0 | 28.11 | 3 | 59.66 | 1.29 | 7.51 |
| EW | 8.73 | 16.73 | 2.48 | 51.19 | 0.18 | 19.49 | 1.19 |
| EM | 0.1 | 0 | 1.72 | 2.83 | 90.18 | 1.11 | 4.05 |
| SW | 11.19 | 16.39 | 2.94 | 40.43 | 0.2 | 27.67 | 1.18 |
| SM | 0.13 | 0 | 11.56 | 2.37 | 63.34 | 3.02 | 19.58 |

Tab. 7

| durchschnittliche Genauigkeit 49.11 % | | | | | | |
|---|---|---|---|---|---|---|
| | K | JW | JM | EW | EM | SW | SM |
| K | 41.73 | 42.64 | 0.3 | 7.89 | 6.37 | 0.76 | 0.3 |
| JW | 13.12 | 62.26 | 0.32 | 16.56 | 0 | 7.74 | 0 |
| JM | 3.65 | 1.39 | 54.94 | 3 | 28.76 | 1.07 | 7.19 |
| EW | 6.16 | 21.72 | 3.03 | 43.29 | 0.92 | 23.99 | 1.19 |
| EM | 0.61 | 0.1 | 18.12 | 0.3 | 70.75 | 0.1 | 9.82 |
| SW | 4.32 | 21.2 | 4.32 | 35.43 | 0.49 | 31.99 | 2.26 |
| SM | 4.6 | 1.97 | 20.24 | 1.84 | 27.6 | 5.12 | 38.63 |

Tab. 9

23

EP 2 028 647 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02069320 A
- WO 0150455 A

- EP 1249016 B1

**In der Beschreibung aufgeführte Nicht-Patentliteratur**

- **MÜLLER, C.** Zweistufige kontextsensitive Sprecherklassifikation am Beispiel von Alter und Geschlecht. Akademische Verlagsgesellschaft Aka, 2006
- **METZE, F. ; AJMERA, J. ; ENGLERT, R. ; BUB, U. ; BURKHARDT, F. ; STEGMANN, J. ; MÜLLER, C. ; HUBER, R. ; ANDRASSY, B. ; BAUER, J.** Comparison of Four Approaches to Age and Gender Recognition for Telephone Applications. *Proceedings of the 32nd International Conference on Acoustics, Speech, and Signal Processing (ICASSP 2007),* 2007
- Verbmobil: Foundations of Speech-To-Speech Translation. **WOLFGANG WAHLSTER.** Eliis Horwood Series in Artificial Intelligence. Springer, 2000
- **CHRISTIAN MÜLLER.** Multimodal Dialog in a Pedestrian Navigation System. *Proceedings of ISCA Tutorial and Research Workshop on Multi-Modal Dialogue in Mobile Environments,* 2002, 42-44
- **SORIN DUSAN.** Estimation of Speaker's Height and Vocal Tract Lenghl from Speech Signal. *Proceedings of 9th European Conference on Speech Communication and Technology Unterspeech 2005,* 2005
- **B.L. PELLOM ; J.H.L. HANSEN.** Voice analysis in adverse conditions: The Centennial Olympic Park bombing 911 call. *Proceedings of the 40th IEEE Midwest Symposium an Circuits and Systems,* 1997
- Recognizing Time Pressure and Cognitive Load on the Basis of Speech: An Experimental Study. **CHRISTIAN MÜLLER ; BARBARA GROßMANN-HUTTER ; ANTHONY JAMESON ; RALF RUMMER ; FRANK WITTIG.** UM2001, User-Madeling. • Proceedings of the Eighth international Conference. Springer, 2001, 24-33
- **CHRISTIAN MÜLLER.** Zweistufige kontextsensitive Sprecherklassifikation am Beispiel von Alter und Geschlecht. *Ph.D. thesis,* 2005

- **CHRISTIAN MÜLLER ; F. WITTIG ; J. BAUS.** Exploiting Speech for Recagnizing Elderly Users to Respond to theirSpecial Needs. *Proceedings of the Eighth European Conference an Speech Communication and Technology (Eurospeech 2003),* 2003, 1305-1308
- **CHRISTIAN MÜLLER ; FRANK WITTIG.** Speech as a Source for Ubiquitous User Modeling. *Proceedings of the Workshop on User Modeling in Ubiquitaus Computing in conjunction with the Ninth International 25Conference on User Modeling (UM 2003),* 2003, 46-50
- **RAINER WASINGER ; ANTONIO KRÜGER ; OLIVER JACOBS.** Integrating Intra and Extra Gestures into a Mobile and Multimodal Shopping Assistent. *Proceedings of the 3rd International Conference on Pervasive Computing (Pervasive),* 2005, 297-314
- **RAINER WASINGER ; CHRISTOPH STAHL ; ANTONIO KRÜGER.** M3I in a Pedestrian Navigation & ExplorationSystem. *Proceedings of the Fourth international Symposium on Human Computer Interaction with Mobile Devices,* 2003, 481-485
- **A. BATLINER ; R. HUBER ; H. NIEMANN ; E. NÖTH ; J. SPILKER ; K. FISCHER.** The Recognition of Emotion. Springer, 2000, 122-130
- **RICHARD 0. DUDA ; PETER E. HART ; DAVID G. STARK.** Pattern Classification. Wiley-Interscience, 2000
- **IAN H, WITTEN ; EIBE FRANK.** Data Mining: Practical Machine Learning Tools and Techniques With Java Implementations. Morgan Kaufmann Publishers, 1999
- **D. A. REYNOLDS ; T. F. QUATIERI ; R. B. DUNN.** Speaker Verification Using Adapted Gaussian Mixture Models. *Digital Signal Processing,* 2000, vol. 10, 19-41
- SpeakerVerification using Text-Constrained Gaussian Mixture Models. **D.E. STURIM ; D.A. REYNOLDS ; R.B. DUNN ; T.F. QUATIERI.** Proceedings of the International Conference an Acoustics, Speech, and Signal Processing (ICASSP 2002). 1EEE, 2002, 677-680

- Speaker identification using Gaussian mixture models based an multi-space probability distribution. **C. MIYAJIMA ; Y. HATTORI ; K. TOKUDA ; T. MASUKO ; T. KOBAYASHI ; T. KITAMURA.** Proceedings of the International Conference an Acoustics, Speech, and Signal Processing (ICASSP 2001). IEEE, 2001

- **HJALMARSSON, A.** Adaptive Spoken Dialogue Systems. Centre for Speech Technofogy, Januar 2005